Europäisches Patentamt

European Patent Office

Office européen des brevets

(11) Numéro de publication : **0 280 697 B1**

(12)

# FASCICULE DE BREVET EUROPEEN

(45) Date de publication du fascicule du brevet :
23.09.92 Bulletin 92/39

(21) Numéro de dépôt : 87904889.0

(22) Date de dépôt : 22.07.87

(86) Numéro de dépôt international :
PCT/FR87/00293

(87) Numéro de publication internationale :
WO 88/00795 11.02.88 Gazette 88/04

(51) Int. Cl.$^5$ : **A01N 65/00**, A01N 55/08,
A01N 55/00, A01N 43/40,
A01N 37/36, A01N 37/16,
A01N 37/02, A01N 33/12

(54) COMPOSITION ANTISEPTIQUE INCORPORANT DES HUILES ESSENTIELLES.

Le dossier contient des informations
techniques présentées postérieurement au
dépôt de la demande et ne figurant pas dans
leprésent fascicule.

(30) Priorité : 25.07.86 FR 8610985

(43) Date de publication de la demande :
07.09.88 Bulletin 88/36

(45) Mention de la délivrance du brevet :
23.09.92 Bulletin 92/39

(84) Etats contractants désignés :
AT BE CH DE FR GB IT LI LU NL SE

(56) Documents cités :
CA-A- 1 120 820
FR-A- 1 188 247
FR-A- 1 401 489
FR-A- 2 193 785
GB-A- 927 540

(73) Titulaire : GARCIN, Francoise
7, avenue des Cottages
F-63000 Clermont-Ferrand (FR)

(72) Inventeur : GARCIN, Francoise
7, avenue des Cottages
F-63000 Clermont-Ferrand (FR)

(74) Mandataire : Chanet, Jacques
Conseil en Brevets 129 Avenue de Royat B.P.
27
F-63400 Chamalières (FR)

## Description

La présente invention est du domaine de la désinfection par voie chimique.

Elle a pour objet un procédé d'obtention d'un produit désinfectant par mélange de produits chimiques et d'huiles essentielles, ainsi que le produit obtenu qui présente des qualités supérieures aux autres produits actuellement sur le marché et n'en présente pas les inconvénients.

Il existe actuellement dans ce domaine de nombreux produits qui ne peuvent pas répondre à une hygiène rigoureuse sans présenter de nombreux inconvénients. Les produits à base de chlore ont une odeur désagréable ; ils provoquent la corrosion du matériel désinfecté ; ils sont irritants et toxiques pour le manipulateur. Leur action est éphémère, ils ne présentent pas de rémanence. On observe avec eux une résistance de certains microorganismes et en particulier des spores. Leur action antimicrobienne est gênée par la présence de matières organiques déposées sur le matériel à désinfecter.

Les produits à base d'iode sont toxiques et irritants pour les tissus, entraînent des états d'hypersensibilisation ; ils sont cytotoxiques au niveau des tissus profonds et des muqueuses.

Les produits à base d'aldéhydes sont irritants et toxiques : on a observé des problèmes d'allergies ; ils sont coûteux et leur activité est trop lente.

Les produits à base de composés phénoliques sont volatils et de ce fait leur activité antimicrobienne est éphémère. Ils sont rendus inactifs par la présence de matières organiques.

Les produits à base d'ammonium quaternaires employés seuls ont un domaine d'action moins large : ils atteignent pas les virus résistants.

La présente invention vise à remédier aux inconvénients des produits précités tout en atteignant une activité antimicrobienne supérieure.

Selon la présente invention, une composition désinfectante (ou antiseptique) est constituée par un mélange de sels d'ammonium quaternaire additionné d'un acide et d'huiles essentielles.

La composition comprend pour agir en synergie au moins les composants suivants (à une concentration % par rapport aux autres composants, comprise dans la fourchette) :
- mélange d'ammonium quaternaires, de préférence mélange de chlorures d'alcoyl-diméthyl-benzyl ammonium (poudre ou liquide) (40-75%),
- au moins un composé du groupe de composés comprenant les acides organiques, les perborates, les peracides et leurs sels (10-15%),
- un produit naturel : huiles essentielles (10-50%).

On connaît cependant un brevet GB-A-927 540 qui décrit une composition désinfectante basée inter alia sur le chlorure de benzalconium, le perborate de sodium et contenant des parfums ; cette composition ne comprend pas d'huiles essentielles.

Un brevet FR-A-1 188 247 décrit aussi un désinfectant formé inter alia par des acides organiques, (tel l'acide citrique), des huiles essentielles et entre autres l'ammoniaque ; ce désinfectant ne comprend pas de sels d'ammonium quaternaire.

Un brevet CA-A-1 120 820 décrit un produit basé entre autres, sur l'huile de pins et des sels d'ammonium quaternaire (tel le chlorure d'alcoyl dimethylbenzyl ammonium), mais ce produit ne comprend ni d'acides peracétique ni acides organiques.

Un brevet FR-A-1 401 489 porte sur un agent pour la conservation des produits alimentaires, la stérélisation etc..., basé sur des huiles essentielles (par exemple le thymol) et des huiles organiques (tel l'acide acétique, benzoique, formique), mais cet agent ne comprend pas de sels d'ammonium quaternaire.

Un brevet FR-A-2 193 785 concerne un procédé pour éliminer les germes utilisant le péroxyde d'hydrogène ($H_2O_2$) et un sel d'ammonium quaternaire (tel de chlorure n-alcoyl-diméthylbenzyl ammonium), mais la composition mise en oeuvre par ce procédé ne comprend pas d'huiles essentielles.

On notera que selon une formulation particulière les péracides peuvent être remplacés par des produits de départs tels que perborate de sodium et composé acétylé, en milieu alcalin, ou encore acide acétique ; cette formulation consiste à mettre en présence extemporarément un agent oxydant et un acide pour obtenir le péracide correspondant.

En outre, on adjoindra si nécessaire, un colorant, un produit anti-corrosion, un conservateur, un stabilisant, (par exemple : acide dipicolinique, 8-hydroxyquinoléine, etc...).

Le conditionnement de cette composition peut se faire soit :
- en flacons ou bidons de capacité variable,
- en doses unitaires : sachets, ampoules à deux compartiments, berlingots et toutes formes unitaires avec deux compartiments pour obtenir le mélange des deux principes actifs au moment de l'emploi,
- en flacon avec bouchon operculé qui libère un des produits par un système de vissage,
- par le moyen de serviettes imbibées de la composition.

Suivant un autre mode de conditionnement, la composition de l'invention (ammonium quaternaire, acide, huile essentielle) est mélangée à une poudre inerte, telle qu'amidon de maïs de préférence, pour former une pâte conditionnable en tube, ce qui évite le mélange extemporané des trois constituants ; la pâte est prête à être diluée dans l'eau. Au lieu d'une poudre on pourrait encore envisager de mélanger les trois constituants à un liquide inerte.

Des tests en laboratoire ont démontré l'activité supérieurs de cette nouvelle composition par rapport aux autres actuellement sur le marché (à base chlore, hypochlorite, formol, phénol, glutaraldéhyde, etc... ) vis-à-vis notamment des bactériophages-tests les plus résistants, ce qui constitue un critère de choix pour les hygiénistes responsables des établissements médicaux et pour les industries où l'hygiène est contrôlée.

On observe une forte synergie entre les deux bases chimiques :
– l'ammonium quaternaire employé seul n'est pas suffisamment actif sur les virus résistants ; il apporte dans le mélange son pouvoir détergent et son pouvoir rémanent et favorise l'activité de l'acide peracétique,
– l'acide peracétique employé seul présente une activité inférieure à celle du mélange ; il apporte son action rapide et son activité antimicrobienne du fait de son pouvoir oxydant qui est exhalté par la présence de l'ammonium quaternaire. L'acide peracétique n'est pas inactivé par les matières organiques et les savons.

L'acide peracétique une fois dilué se décompose en produits physiologiques, ce qui lui enlève tout problème de toxicité aux doses préconisées.

L'huile essentielle naturelle apporte son action antimicrobienne et neutralise l'odeur de l'acide peracétique.

Il est à noter que la composition de l'invention ne nécessite que de faibles concentrations en principes actifs pour exercer une forte activité antimicrobienne : bactéricide, virucide, fongicide, sporicide). Son action est rapide (moins de 5 minutes), et rémanente.

Cette forte syneryie des deux substances chimiques entrant dans la composition est très intéressante pour son application en hygiène ; elle permet une désinfection efficace des germes résistants par une méthode de stérilisation chimique à froid.

Exemples de formulations

Formule n° 1

```
. solution A      mélange de chlorures d'alcoyl dimethyl
  (50 %)                        benzyl ammonium 50 %      0,2    ml


                  acide peracétique 35 %.........       0,285 ml
. solution B      (ou dilué à 3 % et stabilisé)....     (3,00 ml)
  (28 %)          Huile essentielle d'Eucalyptus.        0,071 ml


. eau QSP 100 ml
```

solutions A et B mélanger extemporarément dans 100 ml d'eau.

Formule n° 2

. solution A     mélange de chlorures d'alcoyl 50 %
(10 %)            diméthyl benzyl ammonium 0,2 ml   1 ml

         eau distillée ou purifiée.....   0,8 ml

         acide peracétique à 35 %              0,285 ml

. solution B    (ou dilué à 3 % et stabilisé)......     (3,00 ml)

(28 %)      Huile essentielle d'Eucalyptus ou       0,071 ml
                       romarin

eau QSP 100 ml

Formule n° 3

- mélange de chlorures d'alcoyl diméthyl
           benzyl ammonium   50 %         0,2 ml
   (ou solution à 10 %      1 ml)

- acide acétique.....................      1     ml
- huile essentielle.................     0,08 ml
- eau distillée..................... QSP   100     ml

Formule n° 4

- mélange de chlorures d'alcoyl diméthyl.............   0,2 ml
              benzyl ammonium 50 %

- Acide citrique....................................    1     ml
- Huile essentielle.................................   0,08 ml
- Eau distillée ou purifiée QSP 100 ml

Formule n° 5

Solution A : 50 %

- Mélange de chlorure diméthyl benzyl ammonium 50 %... 0,2    ml

Solution B : 50%

- Acide peracétique 4 % stabilisé................   2,5    ml
- Huile essentielle (huile de pin)..............   0,071 ml
- Eau distillée ou purifiée QSP 100 ml.

4

## Revendications

1.- Composition désinfectante, ou antiseptique, du genre de composition incorporant des sels d'ammonium quaternaire, et/ou des acides organiques ou des peracides organiques ou leurs sels et/ou des huiles essentielles, caractérisée :

en ce qu'elle comprend pour agir en synergie, au moins les composants suivants (à une concentration % par rapport aux autres composants, comprise dans la fourchette) :
 – le chlorure d'alcoyl-diméthyl-benzyl ammonium (40-75%)
 – le perborate de sodium (10-15%)
 – une huile essentielle du groupe comprenant : l'huile de Romarin, l'huile d'Eucalyptus, l'huile de pin (10-50%) ;

2.- Composition selon la revendication 1, caractérisée :
 en ce que ledit sel au moins d'ammonium quaternaire est le chlorure d'alcoyl-diméthyl-benzyl amonium ;

3.- Composition selon la revendication 1, caractérisée :
 en ce que ledit acide organique est un peracide ;

4.- Composition selon la revendication 1, caractérisée :
 en ce que ledit peracide organique est l'acide peracétique ;

5.- Composition selon la revendication 1, caractérisée :
 en ce que ladite huile essentielle au moins est l'une au moins des huiles du groupe comprenant : l'huile de Romarin, l'huile d'Eucalyptus, l'huile de pin ;

6.- Composition désinfectante selon la revendication 1, caractérisée :
 en ce qu'elle comprend en outre un agent stabilisant ;

7.- Composition selon la revendication 6, caractérisé :
 en ce que ledit agent stabilisant est l'acide dipicolinique ;

8.- Procédé de préparation d'une composition selon l'une quelconque des revendications 1 à 7, caractérisé :
 en ce que l'on mélange extemporarément une solution A comprenant le sel d'amonium quaternaire, et une solution B comprenant ledit acide ou peracide mélangé avec l'huile essentielle, dans la quantité d'eau complémentaire ;

9.- Procédé de préparation d'une composition selon l'une quelconque des revendications 1 à 7, caractérisé :
 en ce que l'on mélange extemporanément une solution A comprenant le sel d'amonium quaternaire et un agent oxydant (perborate de sodium, peroxyde d'hydrogène) et une solution B comprenant un acide organique et une huile essentielle, dans la quantité d'eau complémentaire.


## Patentansprüche

I. Desinfizierende oder antiseptische Verbindung mit quaternären Ammoniumsalzen und/oder organischen Säuren oder organischen Persäuren oder deren Salzen und/oder ätherischen Ölen,
dadurch gekennzeichnet, daß diese zur synergetischen Unterstützung wenigstens die folgenden Bestandteile umfaßt (bei einer prozentualen Konzentration in Bezug auf die anderen Bestandteile, die in dem Bereich enthalten sind):
 – Ammoniumalkyldimethylbenzylchlorid (40-75 %)
 – Natriumperborat (I0-I5 %)
 – ein ätherisches Öl jener Gruppe, die umfaßt: Rosmarinöl, Eukalyptusöl, Pinienöl (I0-I5 %).

2. Verbindung nach Anspruch I, dadurch gekennzeichnet, daß das genannte quaternäre Ammoniumsalz Ammoniumalkyldimethylbenzylchlorid ist.

3. Verbindung nach Anspruch I, dadurch gekennzeichnet, daß die genannte organische Säure eine Persäure ist.

4. Verbindung nach Anspruch I, dadurch gekennzeichnet, daß die organische Säure Peressigsäure ist.

5. Verbindung nach Anspruch I, dadurch gekennzeichnet, daß das genannte ätherische Öl wenigstens eines der Öle aus der Gruppe ist, die enthalten: Rosmarinöl, Eukalyptusöl, Pinienöl.

6. Desinfizierende Verbindung nach Anspruch I, dadurch gekennzeichnet, daß diese außerdem einen Stabilisator enthält.

7. Verbindung nach Anspruch 6, dadurch gekennzeichnet, daß der Stabilisator eine dipicolonische Säure ist.

8. Verfahren zum Herstellen einer Verbindung gemäß einem der Ansprüche I-7, dadurch gekennzeichnet,

daß man zwischenzeitlich eine Lösung A, quaternäres Ammoniumsalz enthaltend, und eine Lösung B, die genannte Säure oder Persäure, gemischt mit dem ätherischen Öl, miteinander mischt, und zwar in der komplementären Wassermenge.

9. Verfahren zum Herstellen einer Verbindung gemäß einem der Ansprüche I-7, dadurch gekennzeichnet, daß man zwischenzeitlich eine Lösung A, enthaltend quaternäres Ammoniumsalz sowie ein Oxidationsmittel (Natriumperborat, Wasserstoffperoxid) und eine Lösung B, enthaltend eine organische Säure und ein ätherisches Öl, miteinander mischt, und zwar in der komplementären Wassermenge.

## Claims

1. A disinfectant or antiseptic composition of the type of composition incorporating quaternary ammonium salts and/or organic acids or organic peracids or their salts and/or essential oils, characterised in that it comprises, in order to act in synergy, at least the following components (at a % concentration, relative to the other components, included in the range):
   - alkyldimethylbenzylammonium chloride (40-75%)
   - sodium perborate (10-15%)
   - an essential oil from the group comprising: rosemary oil, eucalyptus oil, pine oil (10-50%).

2. Composition according to Claim 1, characterised in that the said at least quaternary ammonium salt is alkyldimethylbenzylammonium chloride.

3. Composition according to Claim 1, characterised in that the said organic acid is a peracid.

4. Composition according to Claim 1, characterised in that the said organic peracid is peracetic acid.

5. Composition according to Claim 1, characterised in that the said at least essential oil is at least one of the oils from the group comprising: rosemary oil, eucalyptus oil and pine oil.

6. Disinfectant composition according to Claim 1, characterised in that it additionally comprises a stabilising agent.

7. Composition according to Claim 6, characterised in that the said stabilising agent is dipicolinic acid.

8. Process for the preparation of a composition according to any one of Claims 1 to 7, characterised in that a solution A containing the quaternary ammonium salt is mixed extraporaneously with a solution B containing the said acid or peracid mixed with the essential oil, in the additional quantity of water.

9. Process for the preparation of a composition according to any one of Claims 1 to 7, characterised in that a solution A containing the quaternar ammonium salt and an oxidising agent (sodium perborate, hydrogen peroxide) is mixed extemporaneously with a solution B containing an organic acid and an essential oil, in the additional quantity of water.